# EUROPÄISCHE PATENTSCHRIFT

(11) **EP 2 661 613 B1**
(45) Veröffentlichungstag und Bekanntmachung des Hinweises auf die Patenterteilung: **21.06.2017**
(21) Anmeldenummer: 11810604.6
(22) Anmeldetag: 27.12.2011
(51) Int. Cl.: G01N 15/06, G01N 21/27, G01N 21/47, G01N 21/51, G01N 21/53

(54) **MESSGERÄT ZUR MESSUNG VON PARTIKELKONZENTRATIONEN MITTELS STREULICHT UND VERFAHREN ZUR ÜBERWACHUNG DES MESSGERÄTES**
MEASURING DEVICE FOR MEASURING PARTICLE CONCENTRATIONS BY MEANS OF SCATTERED LIGHT, AND METHOD FOR MONITORING THE MEASURING DEVICE
APPAREIL DE MESURE POUR LA MESURE DE CONCENTRATIONS DE PARTICULES AU MOYEN DE LUMIÈRE DIFFUSE ET PROCÉDÉ POUR LA SURVEILLANCE DE L'APPAREIL DE MESURE

(30) Priorität: 04.01.2011 DE 102011002421
(43) Veröffentlichungstag der Anmeldung: 13.11.2013
(73) Patentinhaber: Robert Bosch GmbH, 70442 Stuttgart (DE)
(72) Erfinder: STENGEL, Karl, 73779 Deizisau (DE); NOBIS, Guenter, 72622 Nuertingen (DE); HAAGA, Gerhard, 73275 Ohmden (DE); NEUENDORF, Michael, 73207 Plochingen (DE)
(86) Internationale Anmeldenummer: PCT/EP2011/074060
(87) Internationale Veröffentlichungsnummer: WO 2012/093050

(56) Entgegenhaltungen:
- US-A- 3 234 846
- US-A- 4 017 186
- US-A- 4 053 229
- US-A- 4 907 884
- US-A- 5 777 748

## Beschreibung

Die Erfindung betrifft ein Messgerät zur Messung von Partikelkonzentrationen in Abgasen mittels Streulicht und ein Verfahren zur Überwachung des Messgerätes nach dem Obergriff der unabhängigen Ansprüche.

### Stand der Technik

Die Verwendung von Streulichtverfahren zur Messung der Konzentration von Partikeln in Abgasen und anderen Kolloiden ist im Stand der Technik bekannt.

Ein dafür vorgesehenes Messgerät, wie es beispielsweise in US 4 053 229 offenbart ist, umfasst üblicherweise eine lichtstarke Lichtquelle, wie z. B. ein Laser, die Licht in eine Messkammer strahlt durch die das zu messende Kolloid geleitet wird. Der Messkammer ist wenigstens ein Lichtsensor zugeordnet, der Licht, das von im Kolloid vorhandenen Partikeln gestreut worden ist, detektiert. Um die ordnungsgemässe Funktion eines solches Messgerätes zu überprüfen und das Messgerät zu kalibrieren, ist es erforderlich, in der Messkammer einen definierten Zustand einzustellen, bei dem das eingestrahlte Licht in einer definierten und bekannten Art und Weise gestreut wird. Messgeräte, die für amtliche Messungen verwendet werden, fallen unter die Eichpflicht, wodurch sich die Notwendigkeit, mit hoher Zuverlässigkeit genaue Messergebnisse zu liefern, noch weiter erhöht. Ein derartiges Messgerät wurde in der deutschen Patentanmeldung DE 10 2010 002 423 vorgeschlagen.

### Offenbarung der Erfindung

Aufgabe der Erfindung ist es, ein Messgerät und ein Verfahren bereitzustellen, mit dem ein einfaches, zuverlässiges und genaues Überprüfen des Lichtstrahls in der Messkammer des Messgerätes zur Messung von Partikelkonzentrationen möglich ist.
Diese Aufgabe wird mit den kennzeichnenden Merkmalen der unabhängigen Ansprüche gelöst, indem eine Überwachungsvorrichtung im Strahlengang des Lichtstrahls zur Erfassung der Intensität des Lichtstrahls in der Messkammer vorgesehen ist, wobei eine definierte Streustrahlung des Lichtstrahls erzeugt, erfasst und ausgewertet wird, indem die definierte Streustrahlung mit einem Referenzwert der Streustrahlung verglichen wird. Die Strahlung der Lichtquelle trifft dabei im Wesentlichen ungeschwächt auf die Überwachungsvorrichtung. Mit dem erfindungsgemäßen Messgerät und dem erfindungsgemäßen Verfahren wird eine einfache Möglichkeit zur Überwachung und Regelung der Intensität des Lichtstrahl in der Messkammer des Messgerätes geschaffen. Ebenso ist die Erkennung einer Verschmutzung der Lichtquelle und/oder der Lichtsensoren damit möglich.

Die Intensität des Lichtstrahles, auch Strahlungsstärke, ist der Anteil der gesamten Strahlungsleistung, der von der Lichtquelle in einer Raumrichtung, im vorliegenden Fall in Richtung der Messkammer emittiert wird. Vorteilhafte Weiterbildungen der Erfindung sind mit den Merkmalen der Unteransprüche möglich. Die Überwachungsvorrichtung weist einen Streulichtkörper und einen Monitor-Lichtsensor auf, wobei der Streulichtkörper bei Bestrahlung mit Licht der Lichtquelle eine gestreute Lichtstrahlung mit einer definierten Intensität abgibt und der Monitor-Lichtsensor die vom Streulichtkörper gestreute Lichtstrahlung erfasst. Der Monitor-Lichtsensor liefert ein Signal, welches direkt proportional zur Intensität des Lichtstrahls in der Messkammer ist. Dieses Signal kann daher zur Überwachung und/oder zur Regelung der Intensität des Lichtstrahls in der Messkammer verwendet werden. Zusätzlich oder alternativ ist dadurch auch eine Korrektur der eigentlichen Messsignale der Lichtsensoren möglich.
Gemäß vorteilhafter Ausführungsformen ist der Streulichtkörper in einer Überwachungsposition in Strahlrichtung der Lichtquelle außerhalb der Messkammer, oder in einer Überwachungsposition innerhalb der Messkammer, oder innerhalb der Messkammer in einer Positioniereinrichtung, mit welcher der Streulichtkörper von einer Kalibrierposition in die Überwachungsposition verschiebbar ist, angeordnet. Die Anordnung des Streulichtkörpers erfolgt zweckmäßigerweise in geeigneten Aufnahmevorrichtungen, die in einer Kalibrierposition und/oder in der Überwachungsposition positioniert sind. Dem Monitor-Lichtsensor ist eine Auswerteeinrichtung zur Ermittlung und/oder Darstellung der vom weiteren Lichtsensor aufgenommenen, gestreuten Lichtstrahlung zugeordnet. Das Messgerät weist vorteilhafterweise einen Microcontroller auf, der die vom weiteren Lichtsensor erfasste und von der weiteren Auswerteeinrichtung ermittelte Intensität der Streustrahlung mit einem vorgegebenen Referenzwert für die Streustrahlung vergleicht und daraus die Intensität des Lichtstrahls in der Messkammer bestimmt. Dabei kann der Microcontroller mit der Auswerteeinrichtung und der Lichtquelle verbunden sein und einen Regelkreis enthalten, der die Intensität der Lichtquelle auf den vorgegebenen Referenzwert der Streustrahlung regelt. Weiterhin kann der Microcontroller mit den Auswerteeinrichtungen des Messgerätes verbunden sein, um das Ergebnis einer vorausgegangenen Abgasmessung zu korrigieren. Dazu weist der Microcontroller einen Korrekturalgorithmus auf, mittels dem das Ergebnis der Auswerteeinrichtungen des Messgerätes anhand der Abweichung der ermittelten Intensität der Streustrahlung vom vorgegeben Referenzwert für die Streustrahlung korrigiert wird.
Darüber hinaus kann der Streulichtkörper gleichzeitig in einer Kalibriervorrichtung als Streulichtkörper eingesetzt werden oder umgekehrt, der Streulichtkörper einer vorhandenen Kalibiervorrichtung kann als Streulichtkörper in der Überwachungsvorrichtung eingesetzt werden. Für den Austausch sind nur einfache Mitteln erforderlich, wobei geeignete Aufnahmevorrichtungen in der Kalibierposition und in der Überwachungsposition zur Aufnahme der Streulichtkörper vorgesehen sein können.

Zur Überprüfung des Lichtstrahles in der Messkammer des Messgerätes wird somit eine Überwachungsmessung vor oder nach der Partikelmessung durchgeführt. Dazu wird die von der Überwachungsvorrichtung ermittelte Intensität der Streustrahlung mit dem vorgegebenen Referenzwert für diese Streustrahlung verglichen. Gemäß einer ersten Alternative wird die Lichtintensität der Lichtquelle auf den vorgegebenen Referenzwert der Streustrahlung korrigiert. Gemäß einer zweiten Alternative wird das Ergebnis der Messung der Partikelkonzentration anhand der Abweichung der erzeugten Streustrahlung vom vorgegeben Referenzwert für diese Streustrahlung korrigiert.

### Ausführungsbeispiele

Ausführungsbeispiele der Erfindung sind in der Zeichnung dargestellt und in nachfolgenden Beschreibung näher erläutert.

Es zeigen:
Figur 1 einen schematischen Aufbau eines Messgerätes zur Messung einer Partikelkonzentration mittels Streulicht gemäß einem ersten Ausführungsbeispiel,
Figur 2 einen schematischen Aufbau eines Messgerätes zur Messung einer Partikelkonzentration mittels Streulicht gemäß einem zweiten Ausführungsbeispiel und
Figur 3 einen schematischen Aufbau eines Messgerätes zur Messung einer Partikelkonzentration mittels Streulicht gemäß einem dritten Ausführungsbeispiel.

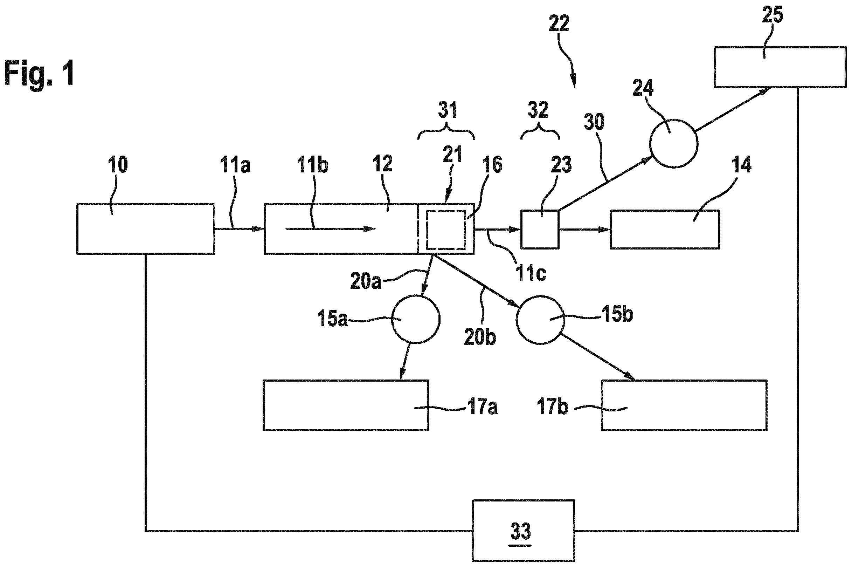

Das in den Figuren 1, 2 und 3 dargestellte Messgerät dient zur Messung einer Partikelkonzentration in Abgasen oder anderen Kolloiden, insbesondere in Abgasen von Kraftfahrzeugen mittels Streulicht. Das Messgerät weist eine Messkammer 12 auf, durch die über nicht gezeigte Zu- und Ableitungen Abgas aus einem Kraftfahrzeug geführt wird. Dabei kann das Abgas durch den vom Motor des Kraftfahrzeugs erzeugten Druck, sogenannten Abgasgegendruck, durch die Messkammer 12 geführt werden. Optional kann zusätzlich eine nicht gezeigte Pumpe vorgesehen sein, um die Abgasströmung durch die Messkammer 12 zu unterstützen.

Das Messgerät weist wenigstens eine Lichtquelle 10 auf, die bspw. als Laserlichtquelle ausgebildet ist. Die Lichtquelle 10 erzeugt im eingeschalteten Zustand einen Lichtstrahl 11a, der mit einer definierten Intensität in die Messkammer 12 eingekoppelt wird und innerhalb der Messkammer 12 als Lichtstrahl 11b verläuft. Der Lichtstrahl 11b tritt aus der Messkammer 12 als weiterer Lichtstrahl 11c aus und trifft hinter der Messkammer 12 auf einen dort angeordneten Strahlungsabsorber 14 (Beamdump), in dem das nicht gestreute oder teilweise absorbierte Licht der Lichtquelle 10 vollständig absorbiert bzw. vernichtet wird.

Der Messkammer 12 sind wenigstens ein, in den in den Figuren 1, 2 und 3 gezeigten Ausführungsbeispielen jeweils zwei Lichtsensoren 15a, 15b zugeordnet, welche Licht aus dem Lichtstrahl 11b, das von Partikeln, die in dem durch die Messkammer 12 geleiteten Abgasstrom vorhanden sind, gestreut worden ist, als Streustrahlungen 20a und 20b detektieren. In der schematischen Darstellung in den Figuren 1, 2 und 3 sind die Lichtquelle 10 und die Lichtsensoren 15a, 15b aus Gründen der besseren Übersichtlichkeit außerhalb der Messkammer 12 dargestellt, obwohl sie in der Realität zumindest teilweise innerhalb oder unmittelbar an der Messkammer 12 angeordnet sind.

Die Lichtsensoren 15a, 15b sind vorzugsweise in verschiedenen Winkeln in Bezug auf die Strahlrichtung der Lichtstrahlung des eingestrahlten Lichtstrahls 11a angeordnet, so dass sie in verschiedenen Winkeln gestreutes Licht als Streustrahlungen 20a und 20b detektieren können. Die von den Lichtsensoren 15a, 15b ausgegebenen elektrischen Signale werden einer oder mehreren elektronischen Verstärker- und Auswerteinrichtungen 17a, 17b zugeführt, welche die Signale auswerten und die Konzentration von Partikeln in der durch die Messkammer 12 geleiteten Gasströmung ermitteln und ausgeben.

Um Messergebnisse mit hoher Genauigkeit, die beispielsweise hohen gesetzlichen Anforderungen entsprechen, zu erhalten, müssen die Lichtsensoren 15a, 15b des Messgerätes regelmäßig kalibriert und die Intensität der Lichtquelle 10 überwacht werden. Zur Eichung der Lichtsensoren 15a, 15b wird eine Kalibriermessung durchgeführt. Dazu wird in der Messkammer 12 in einer definierten Kalibrierposition 31, der die Lichtsensoren 15a und 15b zugeordnet sind, eine Kalibiervorrichtung mit einem Streulichtkörper 21 eingesetzt, wobei der Streulichtkörper 21 definierte Streustrahlungen 20a und 20b erzeugt, welche einer vorgegebenen, bekannten Partikelkonzentration entsprechen. Der Streulichtkörper 21 der Kalibiervorrichtung in der Kalibrierposition 31 ist in den Figuren 1, 2 und 3 jeweils mit gestrichelten Linien angedeutet. Der Streulichtkörper 21 liefert bei definierter Intensität des Lichtstrahles 11b die Streulichtstrahlung 20a und 20b mit definierter Intensität. Der Aufbau eines solchen Streulichtkörpers 21 ist in der deutschen Patentanmeldung 102010002423.6 beschrieben. Zur Kalibriervorrichtung gehören weiterhin die im Messgerät vorhandenen Lichtsensoren 15a, 15b und die dazugehörigen Auswerteeinrichtungen 17a, 17b, so dass das von dem Streulichtkörper 21 in der Messkammer 12 gestreute Licht mit den Streustrahlungen 20a und 20b von den Lichtsensoren 15a, 15b erfasst und von den Auswerteeinrichtungen 17a, 17b die dem Streulichtkörper 21 zugeordnete Partikelkonzentration ermittelte wird. Die Lichtquelle 10 und/oder die Auswerteeinrichtungen 17a, 17b werden so justiert, dass die Auswerteeinrichtungen 17a, 17b die vorgegebene, bekannte Partikelkonzentration als Ergebnis der Kalibriermessung ausgeben.

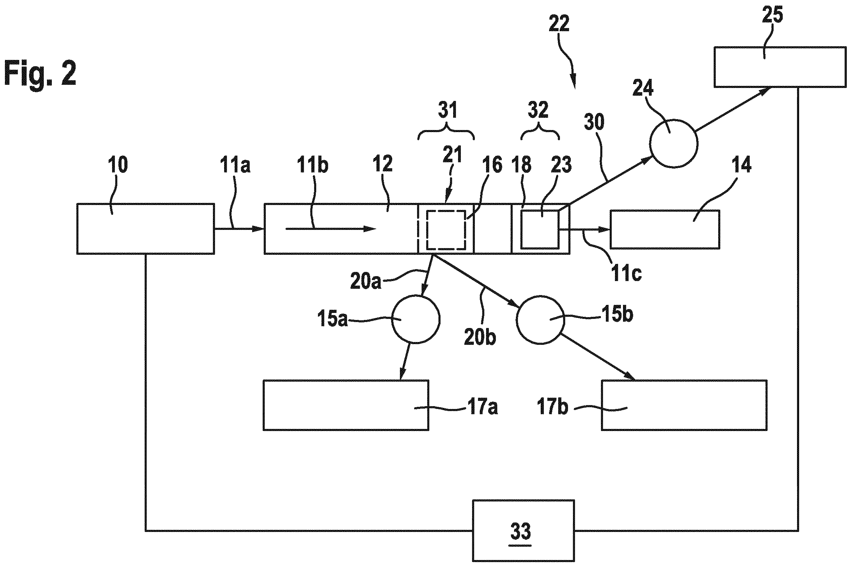

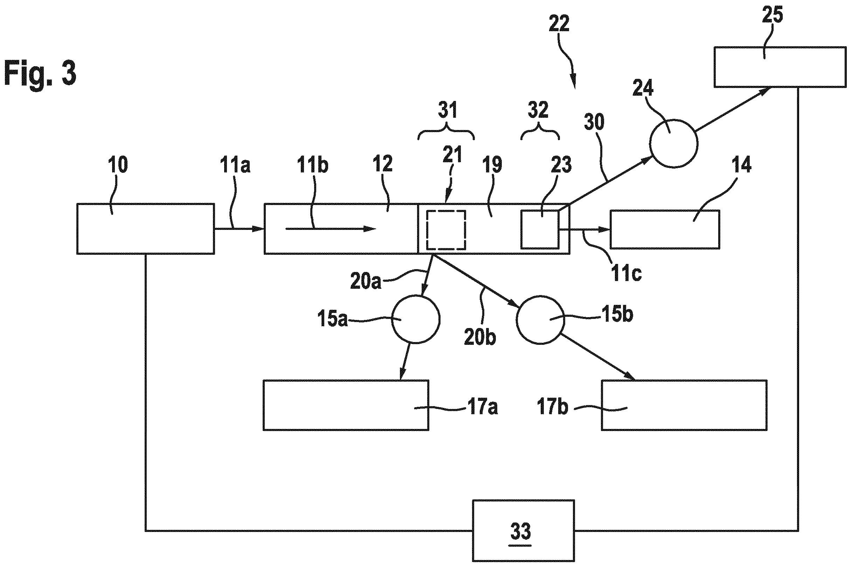

Gemäß der vorliegenden Erfindung wird eine Überwachungsmessung des in der Messkammer 12 verlaufenden Lichtstrahls 11b vorgenommen. Dazu ist eine Überwachungsvorrichtung 22 zur Überwachung der Intensität des Lichtstrahls 11b vorgesehen, die einen weiteren Streulichtkörper 23, mindestens einen weiteren Lichtsensor 24 und mindestens eine weitere Auswerteeinrichtung 25 umfasst. Der weitere Streulichtkörper 23 ist dabei im Strahlengang der Lichtquelle 10 derart angeordnet, dass die Strahlung bzw. der Lichtstrahl 11b der Lichtquelle 10 im Wesentlichen ungeschwächt auf den Streulichtkörper 23 trifft. Der weitere Lichtsensor 24 kann wegen seiner Überwachungsfunktion auch als Monitor-Lichtsensor bezeichnet werden. Der weitere Lichtsensor 24 ist in einem definierten Winkel zur Strahlrichtung des Lichtstrahls 11a, 11b bzw. 11c angeordnet. Der weitere Streulichtkörper 23 ist in einer definierten Überwachungsposition 32 angeordnet, die von der Kalibrierposition 31 verschieden ist, wobei die Überwachungsposition 32 in Strahlrichtung der Lichtquelle 10 vorzugsweise hinter der Kalibrierposition 31 liegt. Der Streulichtkörper 23 liefert bei definierter Intensität des Lichtstrahles 11c (Fig.1) oder 11b (Fig. 2 und 3) eine Streustrahlung 30 ebenfalls mit definierter Intensität, die vom weiteren Lichtsensor 24 erfasst wird, wobei das Signal des weiteren Lichtsensors 24 von der weiteren Auswerteeinrichtung 25 ausgewertet wird.
Die Intensität der Streustrahlung 30 kann in Abhängigkeit vom Winkel zwischen Lichtstrahl 11b oder 11c und Lichtsensor 24 von der Intensität der Streustrahlung 20a und 20b bei der Kalibriermessung abweichen. Werden die Kalibriermessung zur Eichung des Messgerätes und eine erste Überwachungsmessung unmittelbar hintereinander durchgeführt und der Wert der ersten Überwachungsmessung als ein Referenzwert der Streustrahlung 30 abgespeichert, kann mit jeder nachfolgenden Überwachungsmessung die Intensität des Lichtstrahls 11b und/oder das Ergebnis der Partikelmessung mit dem Referenzwert direkt auf den geeichten Zustand zurückgeführt werden.

Als weiterer Streulichtkörper 23 kann der Streulichtkörper 21 der Kalibriervorrichtung verwendet werden und umgekehrt kann der weitere Streulichtkörper 23 der Überwachungsvorrichtung 22 als Streulichtkörper 21 der Kalibriervorrichtung verwendet werden.

Das Messgerät weist ferner einen Microcontroller 33 auf, der die vom weiteren Lichtsensor 23 erfasste und von der weiteren Auswerteeinrichtung 25 ermittelte Intensität der Streustrahlung 30 mit einem vorgegebenen Referenzwert für die Streustrahlung 30 vergleicht. Aus dem Vergleich wird die Intensität des Lichtstrahls 11b in der Messkammer 12 ermittelt. In den vorliegenden Ausführungsbeispielen ist nur eine Verbindung des Microcontrollers 33 zur weiteren Auswerteeinrichtung 25 der Überwachungsvorrichtung 22 und eine Verbindung mit der Lichtquelle 10 dargestellt.

Das vom weiteren Lichtsensor 24 erzeugte Signal wird an die weitere Auswerteeinrichtung 25 zur Ermittlung und/oder Darstellung der Signalgröße des weiteren Lichtsensors 24 weitergeleitet. Mit der Auswerteeinrichtung 25 wird die Intensität der Streustrahlung 30 ermittelt, so dass mittels der Überwachungsvorrichtung 22 und dem Microcontroller 33 die Intensität der Lichtquelle 10 überwacht und geregelt werden kann. Aufgrund der definierten physikalischen Eigenschaften des Streulichtkörpers 23 in der definierten Überwachungsposition 32 und der definierten Anordnung des Lichtsensors 24 sowie unter Berücksichtigung der Ergebnisse der vorangegangenen Kalibriermessung zur Eichung des Messgerätes kann die Intensität des für die Partikelmessung relevanten Lichtstrahles 11b in der Messkammer 12 ermittelt, überwacht und geregelt werden. Weiterhin kann mit dem Ergebnis der Überwachungsmessung das Ergebnis einer oder mehrerer zwischen den Überwachungsmessungen durchgeführten Partikelmessungen bezogen auf den Eichzustand automatisch korrigiert werden.

Die Überwachungsmessung in der Überwachungsposition 32 wird zweckmäßigerweise dann ausgeführt, wenn die Messkammer 12 leer ist und keine streuenden Partikel sowie keinen Streulichtkörper 21 der Kalibriervorrichtung enthält, so dass in der Messkammer 12 im Wesentlichen keine Lichtstreuung auftritt.

Gemäß dem ersten Ausführungsbeispiel in Figur 1 ist in der Messkammer 12 in der Kalibrierposition 31 eine erste Aufnahmevorrichtung 16 zur Aufnahme des Streulichtkörpers 21 der Kalibriervorrichtung vorhanden. Der Streulichtkörper 23 der Überwachungsvorrichtung 22 befindet sich außerhalb der Messkammer 12 und zwar in Strahlrichtung hinter der Messkammer 12 und vor dem Strahlungsabsorber 14 in der Überwachungsposition 32. Zur Überwachungsmessung ist in der ersten Aufnahmevorrichtung 16 in der Kalibrierposition 31 kein Streulichtkörper 21 eingesetzt.

Beim zweiten Ausführungsbeispiel in Figur 2 ist innerhalb der Messkammer 12 neben der ersten Aufnahmevorrichtung 16 in Strahlrichtung eine zweite Aufnahmevorrichtung 18 angeordnet. Die erste Aufnahmevorrichtung 16 befindet sich in der Kalibrierposition 31 und dient zur Aufnahme des Streulichtkörpers 21 der Kalibriervorrichtung. Die zweite Aufnahmevorrichtung 18 befindet sich in der Überwachungsposition 32 und dient zur Aufnahme des weiteren Streulichtkörpers 23 der Überwachungsvorrichtung 22. Zur Überwachungsmessung ist in der ersten Aufnahmevorrichtung 16 in der Kalibrierposition 31 kein Streulichtkörper 21 eingesetzt.

Beim dritten Ausführungsbeispiel in Figur 3 ist innerhalb der Messkammer 12 eine Positioniereinrichtung 19 vorgesehen, mit welcher beispielsweise der gleiche Streulichtkörper 21 aus der Kalibrierposition 31 zur Überwachungsmessung in die Überwachungsposition 32 verschiebbar ist und dort die Funktion des weiteren Streulichtkörpers 23 der Überwachungsvorrichtung 22 übernimmt. Es kann aber ebenso der weitere Streulichtkörper 23 der Überwachungsvorrichtung 22 aus der Überwachungsposition 32 zur Kalibrierung in die Kalibrierposition 31 verschoben werden, so dass dann der Streulichtkörper 23 die Funktion des Streulichtkörpers 21 der Kalibriervorrichtung übernimmt.

Bezüglich der Ausführungsbeispiele in Figur 2 oder 3 ist die Messkammer 12 zweckmäßigerweise mit den Aufnahmevorrichtungen 16, 18 oder der Positioniereinrichtung 19 ausgeführt, in die der Streulichtkörper 21 der Kalibriervorrichtung und der weitere Streulichtkörper 23 der Überwachungsvorrichtung 22 einführbar und dort arretierbar oder der Streulichtkörper 23 positionierbar ist. Dadurch erhält der Streulichtkörper 23 der Überwachungsvorrichtung 22 eine definierte Überwachungsposition 32 innerhalb der Messkammer 12 und erzeugt bei Bestrahlung mit dem Lichtstrahl 11b der Lichtquelle 10 ein definiertes Streulichtmuster mit der Streustrahlung 30, die vom weiteren Lichtsensor 24 erfasst und von der Auswerteeinrichtung 25 als Überwachungsmessung ausgewertet wird. Das Signal der weiteren Auswerteeinrichtung 25 wird dem Microcontroller 33 zugeführt. Aufgrund der definierten physikalischen Eigenschaften des Streulichtkörpers 23 in der definierten Überwachungsposition 32 und der definierten Anordnung des Lichtsensors 24 wird einerseits die Intensität des für die Partikelmessung relevanten Lichtstrahles 11b in der Messkammer 12 ermittelt und überwacht und andererseits wird mit dem Ergebnis der Überwachungsmessung das Ergebnis einer oder mehrerer zwischen den Überwachungsmessungen durchgeführten Partikelmessungen automatisch korrigiert.

Kalibriermessung und eine erste Überwachungsmessung werden unmittelbar hintereinander durchgeführt und der Wert der ersten Überwachungsmessung als Referenzwert abgespeichert, so dass jede nachfolgende Überwachungsmessung mit dem Referenzwert direkt auf die Kalibriermessung und den Kalibrierzustand zurückgeführt werden kann. Andererseits kann die Intensität des Lichtstrahles 11b mit dem Ergebnis jeder Überwachungsmessung und dem bekannten Referenzwert auf den Kalibrierzustand geregelt werden. Wenn vor jeder Partikelmessung eine Überwachungsmessung mit einer Regelung der Intensität des Lichtstrahles 11b durchgeführt wird, kann auf eine Korrekturrechnung der Messergebnisse verzichtet werden.
Durch eine Kalibrierung, welche bei unterschiedlichen Streulichtintensitäten mit unterschiedlichen Streulichtkörpern durchgeführt wird, kann das Messgerät in einem breiten Intensitätsbereich kalibriert werden, so dass es über einen breiten Intensitätsbereich Messergebnisse mit besonders hoher Genauigkeit liefert.

Durch die Überwachungsvorrichtung 22 wird eine Erfassung und Überwachung und/oder Regelung der Intensität des für die Partikelmessung relevanten Lichtstrahles 11b der Lichtquelle 10 durchgeführt. Damit wird es möglich, eine Verschmutzung oder Alterung aller optischen Komponenten im Strahlengang zwischen Lichtquelle 10 und der zu messenden Partikelkonzentration in der Messkammer 12 einerseits zu erfassen und zu überwachen und andererseits mit dem Ergebnis der Überwachungsmessung das Ergebnis einer durchgeführten Partikelmessung automatisch auf den Kalibrierzustand zu korrigieren. Für diesen Zweck kann die Überwachungsvorrichtung 22 entweder permanent oder nur zeitweilig, unmittelbar vor und unmittelbar nach einer Abgasmessung eingesetzt werden.

Andererseits kann eine Verschmutzung oder Alterung aller optischen Komponenten im Strahlengang zwischen Lichtquelle 10 und der zu messenden Partikelkonzentration in der Messkammer 12 durch eine entsprechende Regelung der Intensität des Lichtstrahles 11b grundsätzlich eliminiert werden. Wenn vor jeder Partikelmessung eine Überwachungsmessung mit einer Regelung der Intensität des Lichtstrahles 11b durchgeführt wird, kann auf eine Korrekturrechnung der Messergebnisse verzichtet werden.

In den Ausführungsbeispielen in Figur 1 und Figur 2 ist in der Auswerteeinrichtung 25 oder im Microcontroller 33 eine Ablaufsteuerung vorgesehen, mittels welcher die vorgesehenen Messbedingungen ohne Abgas, ohne Streulichtkörper 21 in der Kalibrierposition 31 und mit ordnungsgemäß positioniertem Streulichtkörper 23 in der Überwachungsposition 32 sicher gestellt werden.

Beim Ausführungsbeispiel in Figur 3 ist im Microcontroller 33 oder in der Auswerteeinrichtung 25 zusätzlich eine weitere Ablaufsteuerung vorgesehen, mittels welcher die Positionierung des weiteren Streulichtkörpers 23 innerhalb der Messkammer 12 vorgenommen wird und die vorgesehenen Messbedingungen ohne Abgas sichergestellt werden.

Die Ablaufsteuerung kann dabei folgende Bedingungen berücksichtigen:
Wenn A)
   - zeitlich vor dem Start der Partikelmessung und
   - Messkammer 12 ohne Abgas und
   - Streulichtkörper 23 in Überwachungsposition 32,
oder wenn B)
   - zeitlich nach der Partikelmessung und
   - Messkammer 12 ohne Abgas und
   - Streulichtkörper 23 in Überwachungsposition 32
   erfüllt sind, wird bei eingeschalteter Lichtquelle 10 die Intensität des Lichtstrahls 11b anhand der Streustrahlung 30 mit dem weiteren Lichtsensor 24 erfasst.

Im Fall A wird mit dem Signal des Lichtsensors 24 vor der Partikelmessung die Intensität der Lichtquelle 10 auf den Eichzustand geregelt. Dazu ist der genannte Regelkreis vorgesehen.

Im Fall B kann eine Messung der Intensität der Streustrahlung 30 nach der Partikelmessung erfolgen, um eine mögliche Drift während der Abgasmessung zu erfassen und ggf. das Ergebnis der Partikelmessung mittels einer Korrekturrechnung auf den Eichzustand zu korrigieren. Die mathematische Beschreibung der Korrekturrechnungen ist in einem Rechnerprogramm umgesetzt und wird von einem im Messgerät vorhandenen weiteren Microcontroller vor der Ausgabe der Werte für die Abgasmessung ausgeführt.

## Patentansprüche

1. Messgerät zur Messung einer Partikelkonzentration in Abgasen mittels Streulicht mit einer Messkammer (12) mit:
wenigstens einer Lichtquelle (10);
wenigstens einem Mess-Lichtsensor (15a, 15b); und
wenigstens einer Mess-Auswerteinrichtung (17a, 17b);
wobei die Messkammer (12) im Strahlengang der Lichtquelle (10) angeordnet ist,
wobei die Lichtquelle (10) einen Lichtstrahl (11a) erzeugt, der in der Messkammer (10) als Lichtstrahl (11b) verläuft, und
wobei der wenigstens einen Mess-Lichtsensor (15a, 15b) in der Messkammer (12) von Partikeln des Abgases gestreutes Licht des Lichtstrahles (11b) erfasst und ein entsprechendes Signal ausgibt,
wobei die wenigstens eine Mess-Auswerteinrichtung (17a, 17b) ausgebildet ist, die von dem wenigstens einen Mess-Lichtsensor (15a, 15b) gelieferte Signale auszuwerten, um die Konzentration von Partikeln in einer durch die Messkammer (12) geleiteten Gasströmung zu ermitteln;
wobei in der Messkammer (12) eine erste Aufnahmevorrichtung (16) zur Aufnahme von einem ersten Streulichtkörper (21) in einer definierten Kalibrierposition (31) derart vorgesehen ist, dass der wenigstens eine Mess-Lichtsensor (15a, 15b) Streustrahlung, die von dem ersten Streulichtkörper (21) ausgeht, erfasst, wenn der erste Streulichtkörper (21) in der definierten Kalibrierposition (31) angeordnet ist und von dem Lichtstrahl (11b) bestrahlt wird; und
wobei der erste Streulichtkörper (21) derart ausgebildet ist, dass er bei Bestrahlung mit dem Lichtstrahl (11b) Streustrahlungen (20a, 20b) erzeugt, die einer vorgegebenen bekannten Partikelkonzentration in der Messkammer (10) entsprechen;
**dadurch gekennzeichnet,**
**dass** das Messgerät eine Überwachungsvorrichtung (22) aufweist, die zur Erfassung der Intensität des Lichtstrahls (11b) in der Messkammer (12) anhand von Streustrahlung (30) ausgebildet ist, wobei die Überwachungsvorrichtung (22) umfasst:
einen zweiten Streulichtkörper (23), der in einer definierten Überwachungsposition (32) angeordnet ist, die von der Kalibrierposition (31) verschieden ist;
mindestens einen Monitor-Lichtsensor (24), der ein der Intensität von Streustrahlung (30), die von dem zweiten Streulichtkörper (23) ausgeht, entsprechendes Signal liefert; und
eine weitere Auswerteeinrichtung (25), die zur Auswertung des Signals des Monitor-Lichtsensors (24) ausgebildet ist,
wobei das Messgerät ausgebildet ist:
eine Kalibrierungsmessung zur Eichung des Messgerätes durchzuführen, bei der der erste Streulichtkörper (21) in der definierten Kalibrierposition (31) angeordnet ist und von dem Lichtstrahl (11b) beleuchtet wird;
eine erste Überwachungsmessung durchzuführen, bei der der zweite Streulichtkörper (23) in der definierten Überwachungsposition (32) angeordnet ist und von dem Lichtstrahl (11b) beleuchtet wird, wobei die Intensität der Streustrahlung (30), die von dem zweiten Streulichtkörper (23) ausgeht, gemessen und als Referenzwert gespeichert wird; und
in folgenden Überwachungsmessungen, bei der der zweite Streulichtkörper (23) in der definierten Überwachungsposition (32) angeordnet ist und von dem Lichtstrahl (11b) beleuchtet wird, die Intensität der Streustrahlung (30), die von dem zweiten Streulichtkörper (23) ausgeht, zu messen und mit dem Referenzwert zu vergleichen.

2. Messgerät nach Anspruch 1, **dadurch gekennzeichnet, dass** die Überwachungsposition (32) in Strahlrichtung der Lichtquelle (10) hinter der Kalibrierposition (31) angeordnet ist.

3. Messgerät nach Anspruch 1 oder 2, **dadurch gekennzeichnet, dass** die Überwachungsposition (32) in Strahlrichtung der Lichtquelle (10) außerhalb der Messkammer (12) angeordnet ist.

4. Messgerät nach Anspruch 1 oder 2, **dadurch gekennzeichnet, dass** die Überwachungsposition (32) innerhalb der Messkammer (12) angeordnet ist.

5. Messgerät nach Anspruch 2, **dadurch gekennzeichnet, dass** innerhalb der Messkammer (12) eine Positioniereinrichtung (19) vorgesehen ist, mit welcher der zweite Streulichtkörper (23) von der Kalibrierposition (31) in die Überwachungsposition (32) verschiebbar ist.

6. Messgerät nach einem der vorhergehenden Ansprüche, **dadurch gekennzeichnet, dass** ein Microcontroller (33) vorgesehen ist, der die vom Monitor-Lichtsensor (24) erfasste und von der weiteren Auswerteeinrichtung (25) ermittelte Streustrahlung (30) mit dem Referenzwert vergleicht.

7. Messgerät nach Anspruch 6, **dadurch gekennzeichnet, dass** der Microcontroller (33) mit der weiteren Auswerteeinrichtung (25) und der Lichtquelle (10) verbunden ist und einen Regelkreis enthält, der die Intensität der Lichtquelle (10) auf den Referenzwert regelt.

8. Messgerät nach Anspruch 6, **dadurch gekennzeichnet, dass** der Microcontroller (33) mit der weiteren Auswerteeinrichtung (25) und den Mess-Auswerteeinrichtungen (17a, 17b) verbunden ist, und dass das Ergebnis einer Abgasmessung korrigiert wird.

9. Messgerät nach Anspruch 8, **dadurch gekennzeichnet, dass** der Microcontroller (33) einen Korrekturalgorithmus aufweist, und dass mittels des Korrekturalgorithmus das Ergebnis der Mess-Auswerteeinrichtungen (17a, 17b) anhand der Abweichung der ermittelten Intensität der Streustrahlung (30) vom Referenzwert korrigiert wird.

10. Messgerät nach einem der vorhergehenden Ansprüche, **dadurch gekennzeichnet, dass** der zweite Streulichtkörper (23) in die erste Aufnahmevorrichtung (16) einsetzbar ist oder der erste Streulichtkörper (21) als zweiter Streulichtkörper (23) in die Überwachungsvorrichtung (22) einsetzbar ist.

11. Messgerät nach Anspruch 10, **dadurch gekennzeichnet, dass** zum Austausch der Streulichtkörper (21, 23) zwischen der Kalibrierposition (31) und der Überwachungsposition (32) eine zweite Aufnahmevorrichtung (18) in der Überwachungsposition (32) vorgesehen ist.

12. Verfahren zur Überwachung des Messgerätes zur Messung einer Partikelkonzentration in Abgasen nach einem der vorhergehenden Ansprüche, **dadurch gekennzeichnet, dass** eine Überwachungsmessung zur Erfassung der Intensität des sich in der Messkammer (12) verlaufenden Lichtstrahls (11b) vorgenommen wird, wobei das Verfahren umfasst, eine Kalibrierungsmessung zur Eichung des Messgerätes durchzuführen, bei der der erste Streulichtkörper (21) in der definierten Kalibrierposition (31) angeordnet ist;
in einer ersten Überwachsmessung den zweiten Streulichtkörper (23), der in einer definierten Überwachungsposition (32) angeordnet ist, die von der Kalibrierposition (31) verschieden ist, mit dem durch die Messkammer (12) verlaufenden Lichtstrahls (11b) zu beleuchten; die Intensität von Streustrahlung (30), die von dem zweiten Streulichtkörper (23) ausgeht, zu messen und als Referenzwert zu speichern;
in folgenden Überwachungsmessungen den zweiten Streulichtkörper (23), der in einer definierten Überwachungsposition (32) angeordnet ist, die von der Kalibrierposition (31) verschieden ist, mit dem durch die Messkammer (12) verlaufenden Lichtstrahls (11b) zu beleuchten, die Intensität von Streustrahlung (30), die von dem zweiten Streulichtkörper (23) ausgeht, zu messen und die Intensität der Streustrahlung (30), die von dem zweiten Streulichtkörper (23) ausgeht, mit dem Referenzwert zu vergleichen.

13. Verfahren nach Anspruch 12, **dadurch gekennzeichnet, dass** anhand eines Vergleiches der ermittelten Streustrahlung (30) mit dem Referenzwert die Intensität des Lichtstrahl (11b) in der Messkammer (12) überwacht und/oder geregelt wird.

14. Verfahren nach Anspruch 12 oder 13, **dadurch gekennzeichnet, dass** die Lichtintensität der Lichtquelle (10) derart korrigiert wird, dass die ermittelte Intensität der Streustrahlung (30) auf den Referenzwert korrigiert wird.

15. Verfahren nach Anspruch 12 oder 13, **dadurch gekennzeichnet, dass** das Ergebnis der Messung der Partikelkonzentration anhand der Abweichung der ermittelten Intensität der Streustrahlung (30) vom Referenzwert korrigiert wird.

## Claims

1. Measuring apparatus for measuring a particle concentration in exhaust gases by way of scattered light having a measurement chamber (12), comprising:
at least one light source (10);
at least one measurement light sensor (15a, 15b); and
at least one measurement evaluation device (17a, 17b);
wherein the measurement chamber (12) is arranged in the beam path of the light source (10),
wherein the light source (10) generates a light beam (11a) that travels within the measurement chamber (10) as the light beam (11b), and
wherein the at least one measurement light sensor (15a, 15b) captures light of the light beam (11b) scattered by particles of the exhaust gas in the measurement chamber (12) and outputs a corresponding signal,
wherein the at least one measurement evaluation device (17a, 17b) is configured to evaluate the signals supplied by the at least one measurement light sensor (15a, 15b) in order to ascertain the concentration of particles in a gas flow that is guided through the measurement chamber (12);
wherein provided in the measurement chamber (12) is a first recording apparatus (16) for recording a first scattered light body (21) in a defined calibration position (31) such that the at least one measurement light sensor (15a, 15b) captures scattered radiation emerging from the first scattered light body. (21) if the first scattered light body (21.) is arranged in the defined calibration position (31) and is irradiated by the light beam (11b); and
wherein the first scattered light body (21) is configured such that, upon irradiation with the light beam (11b), it generates scattered radiation (20a, 20b) that corresponds to a specified known particle concentration in the measurement chamber (10);
**characterized**
**in that** the measuring apparatus has a monitoring apparatus (22) that is configured for capturing the intensity of the light beam (11b) in the measurement chamber (12) on the basis of scattered radiation (30), wherein the monitoring apparatus (22) comprises:
a second scattered light body (23) that is arranged in a defined monitoring position (32) that is different from the calibration position (31);
at least one monitor light sensor (24) that supplies a signal corresponding to the intensity of scattered radiation (30) that emerges from the second scattered light body (23); and
a further evaluation device (25) configured for evaluating the signal of the monitor light sensor (24), wherein the measuring apparatus is configured for:
carrying out a calibration measurement for calibrating the measuring apparatus, in which the first scattered light body (21) is arranged in the defined calibration position (31) and is illuminated by the light beam (11b);
carrying out a first monitoring measurement, in which the second scattered light body (23) is arranged in the defined monitoring position (32) and is illuminated by the light beam (11b), wherein the intensity of the scattered radiation (30) emerging from the second scattered light body (23) is measured and stored as a reference value; and
measuring the intensity of the scattered radiation (30) emerging from the second scattered light body (23) in subsequent monitoring measurements, in which the second scattered light body (23) is arranged in the defined monitoring position (32) and is illuminated by the light beam (11b), and comparing said intensity to the reference value.

2. Measuring apparatus according to Claim 1, **characterized in that** the monitoring position (32) is arranged downstream of the calibration position (31) in the beam direction of the light source (10).

3. Measuring apparatus according to Claim 1 or 2, **characterized in that** the monitoring position (32) is arranged outside the measurement chamber (12) in the beam direction of the light source (10).

4. Measuring apparatus according to Claim 1 or 2, **characterized in that** the monitoring position (32) is arranged inside the measurement chamber (12).

5. Measuring apparatus according to Claim 2, **characterized in that** provided within the measurement chamber (12) is a positioning device (19) with which the second scattered light body (23) is displaceable from the calibration position (31) into the monitoring position (32).

6. Measuring apparatus according to one of the preceding claims, **characterized in that** provided is a microcontroller (33) that compares the scattered radiation (30) that was captured by the monitor light sensor (24) and ascertained by the further evaluation device (25) to the reference value.

7. Measuring apparatus according to Claim 6, **characterized in that** the microcontroller (33) is connected to the further evaluation device (25) and the light source (10) and contains a feedback control loop that regulates the intensity of the light source (10) to the reference value.

8. Measuring apparatus according to Claim 6, **characterized in that** the microcontroller (33) is connected to the further evaluation device (25) and the measurement evaluation devices (17a, 17b) and **in that** the result of an exhaust gas measurement is corrected.

9. Measuring apparatus according to Claim 8, **characterized in that** the microcontroller (33) has a correction algorithm and **in that** the correction algorithm is used to correct the result of the measurement evaluation devices (17a, 17b) on the basis of the deviation of the ascertained intensity of the scattered radiation (30) from the reference value.

10. Measuring apparatus according to one of the preceding claims, **characterized in that** the second scattered light body (23) is placeable into the first recording apparatus (16) or the first scattered light body (21) is placeable into the monitoring apparatus (22) as a second scattered light body (23).

11. Measuring apparatus according to Claim 10, **characterized in that** a second recording apparatus (18) is provided in the monitoring position (32) for the exchange of the scattered light bodies (21, 23) between the calibration position (31) and the monitoring position (32).

12. Method for monitoring the measuring apparatus for measuring a particle concentration in exhaust gases according to one of the preceding claims, **characterized in that** a monitoring measurement for capturing the intensity of the light beam (11b) that travels in the measurement chamber (12) is carried out, wherein the method comprises carrying out a calibration measurement for calibrating the measuring apparatus, in which the first scattered light body (21) is arranged in the defined calibration position (31);
illuminating in a first monitoring measurement the second scattered light body (23) that is arranged in a defined monitoring position (32) that differs from the calibration position (31) with the light beam (11b) that travels through the measurement chamber (12); measuring the intensity of scattered radiation (30) emerging from the second scattered light body (23) and storing it as a reference value;
illuminating in subsequent monitoring measurements the second scattered light body (23) that is arranged in a defined monitoring position (32) that differs from the calibration position (31) with the light beam (11b) that travels through the measurement chamber (12), measuring the intensity of scattered radiation (30) that emerges from the second scattered light body (23) and comparing the intensity of the scattered radiation (30) emerging from the second scattered light body (23) to the reference value.

13. Method according to Claim 12, **characterized in that** the intensity of the light beam (11b) in the measurement chamber (12) is monitored and/or regulated on the basis of a comparison of the ascertained scattered radiation (30) to the reference value.

14. Method according to Claim 12 or 13, **characterized in that** the light intensity of the light source (10) is corrected such that the ascertained intensity of the scattered radiation (30) is corrected to the reference value.

15. Method according to Claim 12 or 13, **characterized in that** the result of the measurement of the particle concentration is corrected on the basis of the deviation of the ascertained intensity of the scattered radiation (30) from the reference value.

## Revendications

1. Appareil de mesure pour la mesure d'une concentration de particules dans des gaz d'échappement au moyen d'une lumière diffuse, comportant une chambre de mesure (12), comprenant :
- au moins une source de lumière (10) ;
- au moins un capteur de lumière de mesure (15a, 15b) ; et
- au moins un dispositif d'évaluation des mesures (17a, 17b) ;
dans lequel la chambre de mesure (12) est disposée sur le trajet lumineux de la source de lumière (10),
dans lequel la source de lumière (10) génère un faisceau lumineux (11a) qui se propage à travers la chambre de mesure (10) sous la forme d'un faisceau lumineux (11b), et
dans lequel l'au moins un capteur de lumière de mesure (15a, 15b) détecte la lumière du faisceau lumineux (11b) diffusée dans la chambre de mesure (12) par des particules de gaz d'échappement et délivre un signal correspondant,
dans lequel l'au moins dispositif d'évaluation des mesures (17a, 17b) est conçu pour évaluer les signaux délivrés par l'au moins un capteur de lumière de mesure (15a, 15b), afin de déterminer la concentration de particules dans un flux de gaz dirigé à travers la chambre de mesure (12) ;
dans lequel il est prévu dans la chambre de mesure (12) un premier dispositif de réception destiné à recevoir un premier corps de lumière diffuse (21) à une position d'étalonnage (31) définie de manière à ce que l'au moins un capteur de lumière de mesure (15a, 15b) détecte un rayonnement diffus provenant du premier corps de lumière diffuse (21) lorsque le premier corps de lumière diffuse (21) est disposé à la position d'étalonnage (31) définie et est exposé au faisceau lumineux (11b) ; et
dans lequel le premier corps de lumière diffuse (21) est conçu de manière à générer, lors de son exposition au faisceau lumineux (11b), des rayonnements diffus (20a, 20b) qui correspondent à des concentrations de particules prédéterminées et connues dans la chambre de mesure (10) ;
**caractérisé en ce que**
l'appareil de mesure comporte un dispositif de surveillance (22) qui est conçu pour détecter l'intensité du faisceau lumineux (11b) dans la chambre de mesure (12) sur la base du rayonnement diffus (30), dans lequel le dispositif de surveillance (22) comprend :
un deuxième corps de lumière diffuse (23) disposé à une position de surveillance (32) définie qui est différente de la position d'étalonnage (31) ;
au moins un capteur de lumière de surveillance (24) qui délivre un signal correspondant à l'intensité du rayonnement diffus (30) provenant du deuxième corps de lumière diffuse (23) ; et
un autre dispositif d'évaluation (25) qui est conçu pour évaluer le signal du capteur de lumière de surveillance (24),
dans lequel l'appareil de mesure est conçu pour :
effectuer une mesure d'étalonnage afin d'étalonner l'appareil de mesure, lors de laquelle le premier corps de lumière diffuse (21) est disposé à la position d'étalonnage (31) définie et est éclairé par le faisceau lumineux (11b) ;
effectuer une première mesure de surveillance lors de laquelle le deuxième corps de lumière diffuse (23) est disposé à la position de surveillance (32) définie et est éclairé par le faisceau lumineux (11b), dans lequel l'intensité du rayonnement diffus (30) provenant du deuxième corps de lumière diffuse (23) est mesurée et est stockée en tant que valeur de référence ; et
lors de mesures de surveillance suivantes lors desquelles le deuxième corps de lumière diffuse (23) est disposé à la position de surveillance (32) définie et est éclairé par le faisceau lumineux (11b), mesurer l'intensité du rayonnement diffus (30) provenant du deuxième corps de lumière diffuse (23) et la comparer à la valeur de référence.

2. Appareil de mesure selon la revendication 1, **caractérisé en ce que** la position de surveillance (32) est située à l'arrière de la position d'étalonnage (31) dans la direction de rayonnement de la source de lumière (10).

3. Appareil de mesure selon la revendication 1 ou 2, **caractérisé en ce que** la position de surveillance (32) est située à l'extérieur de la chambre de mesure (12) dans la direction de rayonnement de la source de lumière (10).

4. Appareil de mesure selon la revendication 1 ou 2, **caractérisé en ce que** la position de surveillance (32) est située à l'intérieur de la chambre de mesure (12).

5. Appareil de mesure selon la revendication 2, **caractérisé en ce qu'**il est prévu, à l'intérieur de la chambre de mesure (12), un dispositif de positionnement (19) à l'aide duquel le deuxième corps de lumière diffuse (23) peut être déplacé de la position d'étalonnage (31) à la position de surveillance (32).

6. Appareil de mesure selon l'une quelconque des revendications précédentes, **caractérisé en ce qu'**il est prévu un microcontrôleur (33) qui compare le rayonnement diffus (30) détecté par le capteur de lumière de surveillance (24) et déterminé par l'autre dispositif d'évaluation (25) à la valeur de référence.

7. Appareil de mesure selon la revendication 6, **caractérisé en ce que** le microcontrôleur (33) est relié à l'autre dispositif d'évaluation (25) et à la source de lumière (10) et **en ce qu'**il comporte un circuit régulateur qui régule l'intensité de la source de lumière (10) à la valeur de référence.

8. Appareil de mesure selon la revendication 6, **caractérisé en ce que** le microcontrôleur (33) est relié à l'autre dispositif d'évaluation (25) et aux dispositifs d'évaluation (17a, 17b) et **en ce que** le résultat d'une mesure de gaz est corrigé.

9. Appareil de mesure selon la revendication 8, **caractérisé en ce que** le microcontrôleur (33) comporte un algorithme de correction et **en ce que** le résultat des dispositifs d'évaluation des mesures (17a, 17b) est corrigé au moyen de l'algorithme de correction sur la base de l'écart entre l'intensité déterminée du rayonnement diffus (30) et la valeur de référence.

10. Appareil de mesure selon l'une quelconque des revendications précédentes, **caractérisé en ce que** le deuxième corps de lumière diffuse (23) peut être inséré dans le premier dispositif de réception (16) ou **en ce que** le premier corps de lumière diffuse (21) peut être inséré en tant que deuxième corps de lumière diffuse (23) dans le dispositif de surveillance (22).

11. Appareil de mesure selon la revendication 10, **caractérisé en ce que**, pour échanger les corps de lumière diffuse (21, 23) entre la position d'étalonnage (31) et la position de surveillance (32), un deuxième dispositif de réception (18) est prévu à la position de surveillance (32).

12. Procédé de surveillance de l'appareil de mesure destiné à mesurer une concentration de particules dans des gaz d'échappement selon l'une quelconque des revendications précédentes, **caractérisé en ce qu'**une mesure de surveillance destinée à détecter l'intensité du faisceau lumineux (11b) se propageant à travers la chambre de mesure (12) est effectuée, dans lequel le procédé consiste à effectuer une mesure d'étalonnage destinée à étalonner l'appareil de mesure, lors de laquelle le premier corps de lumière diffuse (21) est disposé à la position d'étalonnage (31) définie ;
lors d'une première mesure de surveillance, éclairer le deuxième corps de lumière diffuse (23) qui est disposé à une position de surveillance (32) définie qui est différente de la position d'étalonnage (31), avec le faisceaux lumineux (11b) se propageant à travers la chambre de mesure (12) ;
mesurer l'intensité du rayonnement diffus (30) provenant du deuxième corps de lumière diffuse (23) et la stocker en tant que valeur de référence ;
lors de mesures de surveillance suivantes, éclairer le deuxième corps de lumière diffuse (23) qui est disposé à une position de surveillance (32) définie qui est différente de la position d'étalonnage (31), avec le faisceau lumineux (11b) se propageant à travers la chambre de mesure (12), mesurer l'intensité du rayonnement diffus (30) provenant du deuxième corps de lumière diffuse (23) et comparer l'intensité du rayonnement diffus (30) provenant du deuxième corps de lumière diffuse (23) à la valeur de référence.

13. Procédé selon la revendication 12, **caractérisé en ce que** l'intensité du faisceau lumineux (11b) est surveillée et/ou régulée dans la chambre de mesure (12) sur la base d'une comparaison entre le rayonnement diffus (30) déterminé et la valeur de référence.

14. Procédé selon la revendication 12 ou 13, **caractérisé en ce que** l'intensité lumineuse de la source de lumière (10) est corrigée de manière à ce que l'intensité déterminée du rayonnement diffus (30) soit corrigée à la valeur de référence.

15. Procédé selon la revendication 12 ou 13, **caractérisé en ce que** le résultat de la mesure de la concentration de particules est corrigé sur la base de l'écart entre l'intensité déterminée du rayonnement diffus (30) et la valeur de référence.
